# NOUVEAU FASCICULE DE BREVET EUROPEEN

(11) **EP 2 228 242 B2**
(45) Date de publication et mention de la décision concernant l'opposition: **27.03.2019**
(45) Mention de la délivrance du brevet: 20.03.2013
(21) Numéro de dépôt: 10153883.3
(22) Date de dépôt: 17.02.2010
(51) Int. Cl.: B60H 1/00, B29C 45/26, B29L 31/44, B29L 31/00

(54) **Installation de chauffage, ventilation et/ou climatisation avec canal d'air modifié selon version et procédé de fabrication d'un corps de boîtier pour ladite installation**
Heizungs-, Lüftungs-, und/oder Klimaanlage mit angepassten Luftströmungskanal je nach Version.
Heating, ventilating and/or air conditioning device with modified air duct depending on the version.

(30) Priorité: 10.03.2009 FR 0901090
(43) Date de publication de la demande: 15.09.2010
(73) Titulaire: Valeo Systèmes Thermiques, 78321 Le Mesnil Saint Denis (FR)
(72) Inventeur: Vincent, Philippe, 28230 Epernon (FR)
(74) Mandataire: Metz, Gaëlle

(56) Documents cités:
- EP-A- 1 634 735
- WO-A-2008/011068
- FR-A- 2 872 454
- FR-A- 2 899 144
- US-B1- 7 497 677

## Description

L'invention se rapporte aux circuits de climatisation pour véhicules automobiles. Plus particulièrement, l'invention concerne une installation de chauffage, ventilation et/ou climatisation pour un habitacle de véhicule automobile permettant le contrôle de la température de flux d'air dans une ou plusieurs zones de l'habitacle d'un véhicule automobile. L'invention concerne également un procédé de fabrication d'un corps de boîtier pour ladite installation.

Un véhicule automobile est couramment équipé d'une installation de chauffage, de ventilation et/ou de climatisation qui est destinée à réguler les paramètres aérothermiques de l'air distribué dans l'habitacle, en particulier la température et la vitesse d'un flux d'air délivré par l'installation à l'intérieur de l'habitacle. Dans sa généralité, l'installation comprend un boîtier délimité par des parois à travers lesquelles sont ménagées des ouvertures, dont au moins une entrée d'air et au moins une sortie d'air. Le boîtier loge un pulseur pour faire circuler le flux d'air depuis l'entrée d'air vers la sortie d'air. Le boîtier loge aussi des moyens de traitement thermique pour réchauffer et/ou refroidir le flux d'air préalablement à sa distribution à l'intérieur de l'habitacle à travers la sortie d'air. Les moyens de traitement thermique comprennent un évaporateur qui est destiné à refroidir et à déshumidifier l'air le traversant et un radiateur, éventuellement associé à un radiateur additionnel, qui est destiné à réchauffer l'air qui le traverse.

Il est connu des installations telles que décrites précédemment dans lesquelles l'évaporateur est placé à la suite de l'entrée d'air, de sorte que la totalité du flux d'air entrant à l'intérieur du boîtier est refroidi par l'évaporateur. Puis, le flux d'air froid ainsi généré est admis dans une chambre de mixage principale et/ou dans une chambre de chauffage dans laquelle est logé le radiateur et éventuellement le radiateur additionnel. La chambre de mixage principale sert à traiter un ou plusieurs flux d'air destiné(s) à des zones spécifiques de l'habitacle du véhicule automobile dans lequel est intégrée l'installation de chauffage, de ventilation et/ou de climatisation. La chambre de mixage est pourvue d'un premier organe de mixage afin de définir la proportion du flux d'air froid et du flux d'air chaud issu de la chambre de chauffage, qui pénètre dans la chambre de mixage principale afin d'ajuster la température du flux d'air distribué dans la(es) zone(s) dédiées de l'habitacle, en particulier les zones avant et arrière. Il est également demandé, de nos jours, de prévoir une possibilité de gérer les zones avant du véhicule indépendamment de la zone arrière. Pour ce faire, le boîtier loge également une chambre de mixage secondaire destinée à générer un flux d'air secondaire pour aérer une zone secondaire de l'habitacle, telle qu'une zone arrière de ce dernier ou analogue. La chambre de mixage secondaire est en communication aéraulique avec la chambre de chauffage et reçoit tout ou partie du flux d'air ayant traversé l'évaporateur de l'installation de chauffage, de ventilation et/ou de climatisation. La chambre de mixage secondaire est équipée d'un deuxième organe de mixage afin de définir la proportion du flux d'air froid et du flux d'air chaud issu de la chambre de chauffage qui pénètre dans la chambre de mixage secondaire afin d'ajuster la température du flux d'air distribué dans la(es) zone(s) arrière. Une telle installation est notamment connue du document EP0663309A1.

On connaît également des installations de chauffage, ventilation et/ou climatisation, dans lesquelles une partie du boîtier est réalisée de manière différente pour des systèmes de climatisation à zones différentes de l'habitacle. Un groupe moto-ventilateur servant à créer un flux d'air dans l'installation, un évaporateur et un dispositif de chauffage sont disposés dans un boîtier identique et commun à tous les systèmes de chauffage, ventilation et/ou climatisation quelques soient le nombre de zones considérées. La mise en version est obtenue par l'adjonction d'un boîtier spécifique configuré pour répondre aux exigences que le nombre de zones requiert.

Ainsi, pour une configuration à plusieurs zones du système de chauffage, ventilation et/ou climatisation, une dérivation pour la zone arrière est prévue dans une région du boîtier dans un espace qui n'est pas utilisée dans un système de chauffage, ventilation et/ou climatisation ayant un nombre de zones plus réduit. De telles installations sont notamment décrites dans le document EP1634735A1, qui constitue l'art antérieur le plus proche. Par ailleurs, un procédé de fabrication par moulage d'une pièce de véhicule automobile est connu du document FR 2 899 144.

Toutefois, la gestion des variantes des installations de chauffage ventilation et/ou climatisation actuellement connues est complexe et entraîne un surcoût pour l'intégration des sous-ensembles spécifiques. Ces surcoûts sont en outre applicables aux versions haut de gamme multizones, mais également aux versions simples d'une ou deux zones pour lesquelles un coût optimisé est normalement requis.

L'autre problématique rencontrée avec ces sous-ensembles additionnels est l'encombrement des installations. En effet, le volume alloué dans le véhicule est de plus en plus restreint de part l'intégration d'une instrumentation toujours plus conséquente.

Pour utiliser une même architecture d'installations quelque soit les variantes, il existe également une installation de chauffage, ventilation et/ou climatisation présentant un boîtier commun comportant une chambre de mixage principale pour les zones avant de l'habitacle et une chambre de mixage secondaire pour les zones arrière de l'habitacle, applicable pour toutes les variantes d'installations. Selon qu'une indépendance de traitement d'air des différentes zones de l'habitacle est requise, les organes de mixage d'air des chambres de mixage respectives sont solidarisés à l'aide d'organes de liaison tels que des bielles et/ou manivelles.

Toutefois, cette conception peut être pénalisante économiquement pour les versions simples de une ou deux zones pour lesquelles l'air traité diffusé à l'arrière de l'habitacle est à la même température que celui diffusé à l'avant. Les composants constituant la seconde chambre de mixage et les organes de liaison génèrent des surcoûts sans valeur ajoutée pour le confort des passagers. Un autre inconvénient réside dans le volume nécessaire à l'implantation de la cinématique de liaison. En outre, l'éloignement entre les deux chambres de mixage nécessite d'utiliser des conduits de grand volume diminuant la robustesse des performances aérothermiques.

Le but de la présente invention est donc de proposer une installation de chauffage, ventilation et/ou climatisation d'une ou de plusieurs zones de l'habitacle d'un véhicule automobile, permettant de résoudre au moins partiellement les inconvénients de l'art antérieur.

A cet effet, l'invention a pour objet une installation de chauffage, ventilation et/ou climatisation pour un habitacle de véhicule automobile, suivant les caractéristiques de la revendication 1.

Ainsi, on peut obtenir, à partir d'un même boîtier commun et à partir des mêmes composants, une installation selon une première catégorie d'installations à deux chambres de mixage ou une installation selon une deuxième catégorie plus économique, ne comportant qu'une seule chambre de mixage. L'installation présente donc l'avantage de pourvoir répondre aux besoins d'évolutivité en fonction du nombre de zones de l'habitacle d'un véhicule à aérer de façon simple, rapide et à faible coût. En effet, quelque soit la configuration recherchée, l'encombrement de l'installation reste la même et les composants internes sont identiques. Cela permet de réaliser des économies compte tenu des grandes quantités produites pour chaque composant.

Suivant d'autres caractéristiques de ladite installation,
- un canal de dérivation est ménagé dans une partie commune du boîtier, ladite chambre d'air froid de ladite partie commune du boîtier débouche dans un canal principal et un canal secondaire d'air froid et l'agencement du canal principal d'air froid, du canal secondaire d'air froid et du canal de dérivation définit un volume à l'intérieur duquel la chambre de chauffage est ménagée,
- dans ladite première catégorie d'installations, le canal de dérivation forme un canal secondaire d'air chaud, lesdits canaux secondaires d'air froid et d'air chaud débouchant dans ladite chambre de mixage secondaire et dans ladite deuxième catégorie d'installations le canal de dérivation forme un canal de flux d'air traité en température de ladite chambre de mixage principal vers les sorties d'air distribuant l'air vers la deuxième zone,
- ladite chambre de chauffage est délimitée par une paroi d'isolation, une portion de ladite paroi d'isolation appartenant à ladite partie commune du boîtier présentant une première bouche d'admission d'air froid et une bouche principale de refoulement d'air chaud,
- dans la première catégorie d'installations, la paroi d'isolation s'étend depuis ladite bouche principale de refoulement d'air chaud jusqu'à l'enveloppe du boîtier, pour cloisonner ledit canal secondaire de flux d'air chaud et l'isoler des sorties d'air distribuant l'air vers ladite première zone,
- dans ladite deuxième catégorie d'installations, la paroi d'isolation s'étend de part et d'autre de la chambre de chauffage, depuis la première bouche d'admission d'air froid jusqu'à la bouche principale de refoulement d'air chaud, les sorties d'air distribuant l'air vers la première zone et les sorties d'air distribuant l'air vers la deuxième zone étant en communication par le canal de dérivation et la paroi d'isolation obturant une sortie du canal secondaire d'air froid,
- la paroi d'isolation comporte des panneaux de séparation montés amovibles dans la partie commune du boîtier pour configurer la paroi d'isolation selon ladite première catégorie d'installations ou selon ladite deuxième catégorie d'installations,
- la chambre de mixage principale de ladite première catégorie d'installations de chauffage, ventilation et/ou climatisation est adaptée pour la commande des paramètres aérothermiques de l'air distribué dans une zone avant de l'habitacle et la chambre de mixage secondaire de ladite première catégorie d'installations de chauffage, ventilation et/ou climatisation est adaptée pour la commande des paramètres aérothermiques de l'air distribué dans une zone arrière dudit habitacle.

D'autres avantages et caractéristiques apparaîtront à la lecture de la description de l'invention, ainsi que des dessins annexés sur lesquels :
- la figure 1a est une vue en coupe d'une installation de chauffage, ventilation et/ou climatisation selon une première catégorie d'installations en fonctionnement « tout chaud »,
- la figure 1b est une vue similaire à celle de la figure 1a en fonctionnement « tout froid »,
- la figure 2a est une vue en coupe d'une installation de chauffage, ventilation et/ou climatisation selon une deuxième catégorie d'installations en fonctionnement « tout chaud », et
- la figure 2b est une vue similaire à celle de la figure 2a en fonctionnement « tout froid ».

Sur ces figures, les éléments identiques portent les mêmes numéros de référence.

Dans la présente description, on entend par 'zone' un espace de l'habitacle du véhicule dans laquelle est distribué un flux d'air traité à une température donnée et à un débit de flux d'air défini.

Ainsi, pour une installation de chauffage, ventilation et/ou climatisation dédiée à une zone, on considère, de façon générale, que la totalité de l'habitacle est considérée comme une seule et unique zone. En conséquence, il n'y a pas de distinction entre l'espace avant gauche, avant droite et arrière de l'habitacle du véhicule.

Pour une installation de chauffage, ventilation et/ou climatisation dédiée à deux zones, on considère, de façon générale, les seules zones gauche et droite de l'habitacle du véhicule ou les seules zones avant et arrière dudit habitacle. Dans cette configuration, l'habitacle est divisé en un premier espace et un deuxième espace dans lesquels sont distribués des flux d'air respectifs à une température donnée et à un débit de flux d'air défini selon la zone de distribution.

Pour une installation de chauffage, ventilation et/ou climatisation dédiée à trois zones, on considère, de façon générale, la zone avant du véhicule en différenciant la zone avant gauche et la zone avant droite de l'habitacle du véhicule et une unique zone arrière de l'habitacle du véhicule.

Pour une installation de chauffage, ventilation et/ou climatisation dédiée à quatre zones, on considère, de façon générale, la zone avant du véhicule en différenciant la zone avant gauche et la zone avant droite de l'habitacle du véhicule et la zone arrière du véhicule en différenciant la zone arrière gauche et la zone arrière droite de l'habitacle du véhicule. Il est donc possible d'obtenir des mises au point très diverses entre toutes les zones de l'habitacle.

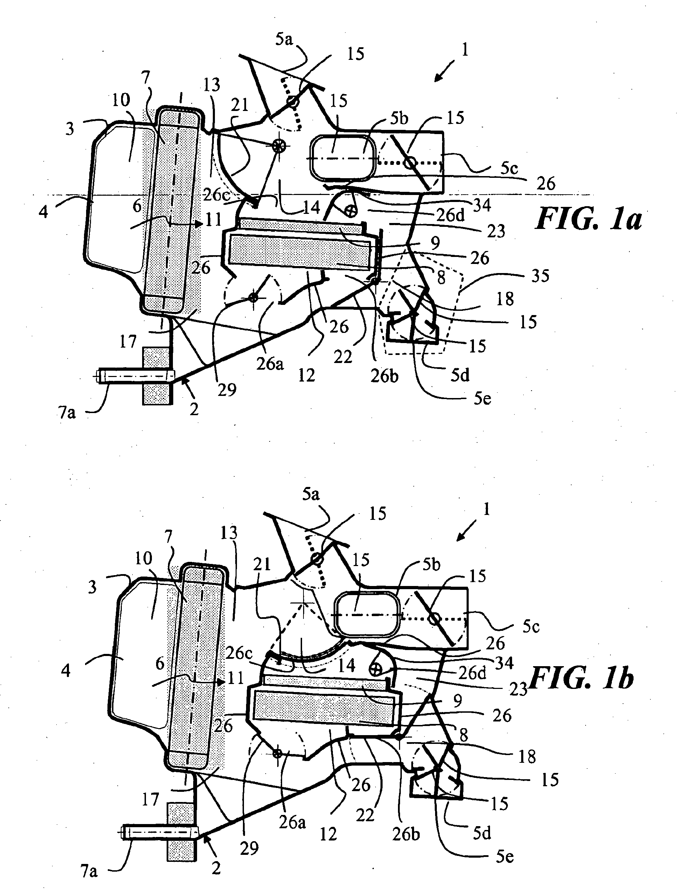

Les figures 1a et 1b représentent une vue en coupe d'une installation 1 de chauffage, de ventilation et/ou de climatisation selon une première catégorie destinée à équiper un véhicule automobile pour réguler de façon indépendante les paramètres aérothermiques du flux d'air distribué dans une première zone et une deuxième zone de l'habitacle.

L'installation comporte une chambre de mixage principale pour la commande des paramètres aérothermiques de l'air distribué dans la première zone et une chambre de mixage secondaire pour la commande des paramètres aérothermiques de l'air distribué dans la deuxième zone indépendamment de la commande de l'air dans ladite première zone.

Dans l'exemple représenté, la chambre de mixage principale est adaptée pour la commande des paramètres aérothermiques de l'air distribué dans une zone avant de l'habitacle et la chambre de mixage secondaire est adaptée pour la commande des paramètres aérothermiques de l'air distribué dans une zone arrière de l'habitacle.

L'installation 1 comporte un boîtier 2 délimité par une enveloppe 3 comportant une entrée d'air 4 et plusieurs sorties d'air 5a, 5b, 5c, 5d et 5e. L'intérieur du boîtier 2 présente une paroi d'isolation interrompue par des ouvertures, définissant des accès, des chambres et des canaux d'air, une chambre de mixage principale et une chambre de mixage secondaire.

Un pulseur, non représenté sur les figures, est agencé en aval de l'entrée d'air 4 pour faire circuler un flux d'air 6 depuis l'entrée d'air 4 dans l'installation 1 et par suite vers les sorties d'air 5a, 5b, 5c, 5d et 5e. Chacune des sorties d'air 5a, 5b, 5c, 5d et 5e est destinée à délivrer un flux d'air respectif dans une zone spécifique de l'habitacle. Des volets pivotants de réglage 15, permettent de régler au gré des utilisateurs la quantité d'air qui circule par chacune de ces sorties. Les volets de réglage 15 sont commandés séparément ou en tout ou partie couplés entre eux.

Comme on peut le voir sur la figure 1a, le boîtier 2 comporte une sortie d'air 'aération' avant 5c du boîtier. Le flux d'air sortant par la sortie d'air 'aération' avant 5c est destiné à être distribué dans la partie supérieure de la zone avant de l'habitacle du véhicule. Il débouche généralement dans l'habitacle par des aérateurs agencés sur la planche de bord.

Le boîtier 2 comporte également une sortie d'air 'pied' avant 5b, agencée à travers la paroi extérieure de l'enveloppe 3 du boîtier 2. Le flux d'air sortant par la sortie d'air 'pied' avant 5b est destiné à être distribué dans la partie inférieure de la zone avant de l'habitacle du véhicule. Il débouche généralement dans l'habitacle par une bouche agencée sur la partie inférieure de la console centrale ou analogue.

Le boîtier 2 comprend une sortie d'air 'dégivrage' avant 5a. Le flux d'air sortant par la sortie d'air 'dégivrage' avant 5a est destiné à être distribué dans une zone agencée en partie inférieure du pare-brise du véhicule.

Le boîtier 2 comprend également une sortie d'air 'aération' arrière 5d. Le flux d'air sortant par la sortie d'air 'aération' arrière 5d est destiné à être distribué dans la partie supérieure de la zone arrière de l'habitacle du véhicule. Il débouche généralement dans l'habitacle par des aérateurs agencés dans la console centrale arrière et/ou sur les montants latéraux de l'habitacle du véhicule.

Le boîtier 2 comprend également une sortie d'air 'pied' arrière 5e. Le flux d'air sortant par la sortie d'air 'pied' arrière est destiné à être distribué dans la partie inférieure de la zone arrière de l'habitacle du véhicule.

L'installation 1 couvre les installations dites « deux zones ». Dans de tels agencements, le nombre de sorties d'air peut être inférieur ou égal à dix. On peut notamment prévoir des sorties d'air dans d'autres destinations de l'habitacle, par exemple à destination d'un montant de portière ou à destination du plafond. On peut également prévoir une seule sortie d'air dans la zone arrière de l'habitacle.

Depuis l'entrée d'air 4 et selon le sens d'écoulement du flux d'air 6, le boîtier 2 loge un filtre 10 pour retenir des particules transportées par le flux d'air 6 et un évaporateur 7, monté dans un logement du boîtier 2. Une sortie d'évacuation des condensables 7a de l'évaporateur 7 est ménagée dans le corps du boîtier 2, en dessous de l'évaporateur 7.

En aval de l'évaporateur 7, le corps du boîtier 2 comporte une chambre d'air froid 11 qui reçoit le flux d'air 6 refroidi par l'évaporateur 7. En variante, lorsque l'installation de chauffage, ventilation et/ou climatisation ne comprend pas d'évaporateur 7, la chambre d'air froid 11 reçoit un air non traité thermiquement.

Dans une portion sensiblement centrale, le boîtier 2 comporte une chambre de chauffage 12 dans laquelle est monté un dispositif de chauffage, tel qu'un radiateur principal 8 et un radiateur électrique auxiliaire 9, en particulier un radiateur électrique comportant des organes de chauffage à coefficient de température positive (CTP).

L'évaporateur 7 et le dispositif de chauffage 8, 9 sont des échangeurs de chaleur qui permettent de refroidir et/ou réchauffer le flux d'air 6 respectivement en un flux d'air froid et un flux d'air chaud. Le flux d'air froid est issu de la traversée du flux d'air 6 à travers l'évaporateur 7 dans la chambre d'air froid 11 et le flux d'air chaud résulte du passage de toute ou partie du flux d'air froid à travers le radiateur de chauffage 8 et/ou le radiateur additionnel 9 dans la chambre de chauffage 12.

Le flux d'air principal 6 peut ainsi être reparti en proportions réglables entre la chambre de chauffage 12 et la chambre d'air froid 11.

La chambre d'air froid 11 est en communication aéraulique avec un canal principal d'air froid 13 qui débouche à l'intérieur d'une chambre de mixage principale 14. Le canal principal d'air froid 13 est destiné à véhiculer un flux d'air froid depuis la chambre d'air froid 11 vers la chambre de mixage principale 14. La chambre d'air froid 11 est également en communication aéraulique avec un canal secondaire d'air froid 17 qui débouche à l'intérieur d'une chambre de mixage secondaire 18. Le canal secondaire d'air froid 17 est destiné à véhiculer un flux secondaire d'air froid depuis la chambre d'air froid 11 vers la chambre de mixage secondaire 18. Le canal secondaire d'air froid 17 est également destiné à véhiculer le flux secondaire d'air froid depuis la chambre d'air froid 11 vers la chambre de chauffage 12.

Des organes de mixage d'air principal 21 et secondaire 22, tels que des volets de type tambour, sont agencés respectivement dans les chambres de mixage principale 14 et secondaire 18, pour en contrôler les accès. Ces dispositions sont telles que les débits des flux d'air froid principal et secondaire ne sont affectés que par les organes de mixage d'air 21 et 22. Il en découle une facilité et une liberté de gestion de la génération de flux d'air en entrée des chambres de mixage principal 14 et secondaire 18.

Un canal de dérivation 23 est ménagé dans le boîtier 2, en aval de la chambre de chauffage 12 dans le sens d'écoulement du flux d'air. L'agencement du canal principal d'air froid 13, du canal secondaire d'air froid 17 et du canal de dérivation 23 définit un volume à l'intérieur duquel la chambre de chauffage 12 est ménagée. En particulier, les canaux d'air froid principal 13 et secondaire 17 sont agencés dans des directions sensiblement perpendiculaires l'une par rapport à l'autre et le canal de dérivation 23 est agencé dans une direction sensiblement parallèle au canal d'air froid principal 13. Il en résulte une minimisation de l'encombrement global de l'installation 1.

Pour éviter un réchauffement, dit 'parasite', des flux d'air froid principal et secondaire issus respectivement du canal principal d'air froid 13 et du canal secondaire d'air froid 17 au contact du dispositif de chauffage 8, 9, une paroi d'isolation 26 s'étend en amont de la chambre de chauffage 12 séparant cette dernière et les canaux d'air froid principal 13 et secondaire 17 et de dérivation 23.

La paroi d'isolation 26 comporte une première bouche d'admission d'air froid 26a à travers laquelle une première fraction du flux secondaire d'air froid est susceptible de circuler afin de traverser par la suite le radiateur de chauffage 8 et/ou le radiateur additionnel 9. La première bouche d'admission d'air froid 26a est équipée d'un premier volet de mixage d'air additionnel 29 mobile entre une position d'ouverture dans laquelle il autorise le passage de la première fraction du flux secondaire d'air froid depuis le canal secondaire d'air froid 17 vers la chambre de chauffage 12, et une position de fermeture dans laquelle il interdit un tel passage.

La paroi d'isolation 26 comporte une deuxième bouche d'admission d'air froid 26b à travers laquelle une deuxième fraction du flux secondaire d'air froid est susceptible de circuler. La deuxième bouche d'admission d'air froid 26b peut être obturée par l'intermédiaire de l'organe de mixage d'air secondaire 22.

La paroi d'isolation 26 comporte également une bouche principale de refoulement d'air chaud 26c à travers laquelle un flux principal d'air chaud est susceptible de circuler depuis la chambre de chauffage 12 vers la chambre de mixage principale 14. La bouche principale de refoulement d'air chaud 26c peut être obturée par l'intermédiaire de l'organe de mixage d'air principal 21.

Dans la première catégorie d'installations, le canal de dérivation 23 forme un canal secondaire d'air chaud. Pour cela, la paroi d'isolation 26 comporte également une bouche secondaire de refoulement d'air chaud 26d débouchant sur ledit canal secondaire d'air chaud 23 dans lequel un flux secondaire d'air chaud est susceptible de circuler vers les sorties 5d, 5e pour la deuxième zone arrière. Ce flux secondaire d'air chaud provient de la bouche secondaire de refoulement d'air chaud 26d pour alimenter la chambre de mixage secondaire 18.

En outre, la paroi d'isolation 26 s'étend depuis la bouche principale de refoulement d'air chaud 26c jusqu'à l'enveloppe 3 du boîtier 2, pour cloisonner le canal secondaire de flux d'air chaud 23 vers la chambre de mixage secondaire 18 pour alimenter la deuxième zone arrière et l'isoler des sorties d'air 5a, 5b, 5c de ladite première zone.

La bouche secondaire de refoulement d'air chaud 26d peut être obturée par l'intermédiaire d'un volet de sécurité additionnel 34. Le volet additionnel 34 est agencé mobile entre une position d'ouverture (figure 1a) et une position de fermeture (figure 1b).

Dans la position d'ouverture (figure 1a), le volet 34 autorise un passage d'un flux secondaire d'air chaud à travers le canal secondaire d'air chaud 23, depuis la chambre de chauffage 12 vers la chambre de mixage secondaire 18. Une extrémité du volet additionnel 34 est par exemple située au tiers de la sortie de la chambre de chauffage 12 de sorte que la portion du flux d'air chaud réorienté soit de l'ordre d'un tiers du flux d'air chaud issu de la chambre de chauffage 12.

Dans la position de fermeture (figure 1b), le volet de sécurité additionnel 34 interdit le passage du flux secondaire d'air chaud. Les deux extrémités du volet de sécurité additionnel 34 sont alors en appui contre des parois du canal secondaire d'air chaud 23 pour en obturer l'accès.

La chambre de mixage principale 14 peut être alimentée de façon contrôlée en air froid et en air chaud par le canal principal d'air froid 13 et le flux principal d'air chaud provenant de la bouche principale de refoulement d'air chaud 26c. La chambre de mixage principale 14 est apte à délivrer un flux d'air mixé respectif à chacune des sorties 5a, 5b et 5c de la zone avant de l'habitacle.

Pour cela, les sorties avant d'air 'aération' 5c, d'air 'pied' 5b et d'air 'dégivrage' 5a, sont disposées en aval, dans le sens d'écoulement du flux d'air, de la chambre de mixage principale 14. Elles forment des sorties d'air pour un flux d'air respectif issu de la chambre de mixage principale 14. Les sorties arrière d'air 'aération' 5d et d'air 'pied' 5e sont disposées en aval, dans le sens d'écoulement du flux d'air, de la chambre de mixage secondaire 18. Elles forment des sorties d'air pour un flux d'air respectif issu de la chambre de mixage secondaire 18.

L'organe de mixage d'air principal 21 est mobile entre une position de fermeture ou "tout chaud" (figure 1a), et une position d'ouverture ou "tout froid" (figure 1b).

Dans la position "tout chaud" (figure 1a), l'organe de mixage d'air principal 21 interdit le passage du flux d'air froid principal depuis la chambre d'air froid 11 vers la chambre de mixage principale 14 tout en autorisant simultanément un passage d'un flux principal d'air chaud issu de la chambre de chauffage 12 vers la chambre de mixage principale 14.

Dans la position "tout froid" (figure 1b), l'organe de mixage d'air principal 21 autorise le passage du flux d'air froid principal depuis la chambre d'air froid 11 vers la chambre de mixage principale 14 tout en interdisant simultanément un passage d'un flux d'air chaud principal issu de la chambre de chauffage 12 vers la chambre de mixage principale 14.

L'organe de mixage d'air principal 21 est agencé de telle façon qu'il calibre, dans des positions intermédiaires, la proportion du flux d'air froid principal issu de la chambre d'air froid 11 et du flux d'air chaud issu de la chambre de chauffage 12 entrant dans la chambre de mixage principale 14. Selon la position de l'organe de mixage d'air principal 21, la chambre de mixage principale 14 est alimentée par un flux d'air totalement froid ou par un flux d'air totalement chaud ou des portions de flux d'air chaud et de flux d'air froid pour obtenir un flux d'air mixé.

Les canaux secondaires d'air froid 17 et d'air chaud 23 débouchent dans la chambre de mixage secondaire 18 pour l'alimenter de façon contrôlée en air froid et en air chaud. La chambre de mixage secondaire 18 est apte à délivrer un flux d'air mixé respectif à chacune des sorties 5d et 5e de la zone arrière de l'habitacle.

L'organe de mixage d'air secondaire 22 est mobile entre une position de fermeture ou "tout chaud" (figure 1a) et une position d'ouverture ou "tout froid" (figure 1b).

Dans la position "tout chaud" (figure 1a), l'organe de mixage d'air secondaire 22 interdit le passage du flux d'air froid secondaire depuis le canal d'air froid secondaire 17 vers la chambre de mixage secondaire 18 tout en autorisant simultanément un passage du flux d'air froid secondaire depuis le canal d'air froid secondaire 17 vers la chambre de chauffage 12.

Dans la position "tout froid" (figure 1b), l'organe de mixage d'air secondaire 22 interdit le passage du flux d'air froid secondaire depuis le canal d'air froid secondaire 17 vers la chambre de chauffage 12 tout en autorisant simultanément un passage du flux d'air froid secondaire depuis le canal d'air froid secondaire 17 vers la chambre de mixage secondaire 18.

Ces dispositions sont telles qu'un flux d'air est susceptible d'être admis à l'intérieur de la chambre de chauffage 12, soit par l'intermédiaire de la première bouche d'admission d'air froid 26a lorsque le premier volet de mixage d'air additionnel 29 est placé en position d'ouverture, soit par l'intermédiaire de la deuxième bouche d'admission d'air froid 26b lorsque l'organe de mixage d'air secondaire 22 est placé en position fermée, soit lorsque les deux configurations précédentes sont simultanément réunies.

L'organe de mixage d'air secondaire 22 est agencé de telle façon qu'il calibre, dans des positions intermédiaires, la proportion du flux d'air froid secondaire issu de la chambre d'air froid 11 et du flux d'air chaud secondaire issu de la chambre de chauffage 12 entrant dans la chambre de mixage secondaire 18. Selon la position de l'organe de mixage d'air secondaire 22 et selon la position du volet de sécurité additionnel 34, la chambre de mixage secondaire 18 est alimentée par un flux d'air totalement froid ou par un flux d'air totalement chaud ou des portions de flux d'air chaud et de flux d'air froid pour obtenir un flux d'air mixé.

La présence de volets de mixage principal 21 et secondaire 22, du volet de mixage additionnel 29 et du volet de sécurité 34 permet de gérer la température des différentes zones de façon particulièrement adaptée et optimisée pour assurer un confort optimal des occupants de la zone dans laquelle l'air traitée est distribué. Ainsi, l'installation 1 permet d'obtenir un flux d'air avant et un flux d'air arrière à des températures différentes.

En effet, les figures 1a et 1b présentent deux configurations extrêmes des volets. La figure 1a présente une configuration dite « tout chaud » à la fois pour la zone avant et la zone arrière. En effet, le flux d'air 6 traversant l'évaporateur 7 atteint la chambre d'air froid 11 pour se diriger en totalité vers le canal secondaire d'air froid 17 du fait de la fermeture par le volet de mixage principal 21 de la chambre de mixage principal 14. Le canal secondaire d'air froid 17 alimente en air froid la chambre de chauffage 12. La totalité de l'air froid issu de la chambre d'air froid 11 traverse la chambre de chauffage 12 via la bouche principale d'admission d'air froid 26a et la deuxième bouche d'admission d'air froid 26b puisque le volet de mixage additionnel 29 est ouvert et que le volet de mixage secondaire 22 ferme la connexion du canal secondaire d'air froid 17 avec la chambre de mixage secondaire 18. Une partie du flux d'air traversant le chambre de chauffage 12 atteint la chambre de mixage principal 14 via la bouche principale de refoulement d'air chaud 26c et l'autre partie du flux d'air traversant le chambre de chauffage 12 atteint la chambre de mixage secondaire 18 via la bouche secondaire de refoulement 26d. Ainsi, le flux d'air atteignant les sorties 5a, 5b, 5c, 5d et 5e est issu de la chambre de chauffage 12 uniquement et n'est pas un mélange de flux d'air froid et de flux d'air chaud. De la sorte, les zones avant et arrière seront alimentées en air chaud.

La figure 1b présente une configuration dite « tout froid » à la fois pour la zone avant et la zone arrière. La position des différents volets isole totalement la chambre de chauffage 12 de sorte que la chambre de mixage principal 14 et la chambre de mixage secondaire 18 sont alimentées par un air froid issu de la chambre d'air froid 11, cet air froid ne traversant pas la chambre de chauffage 12.

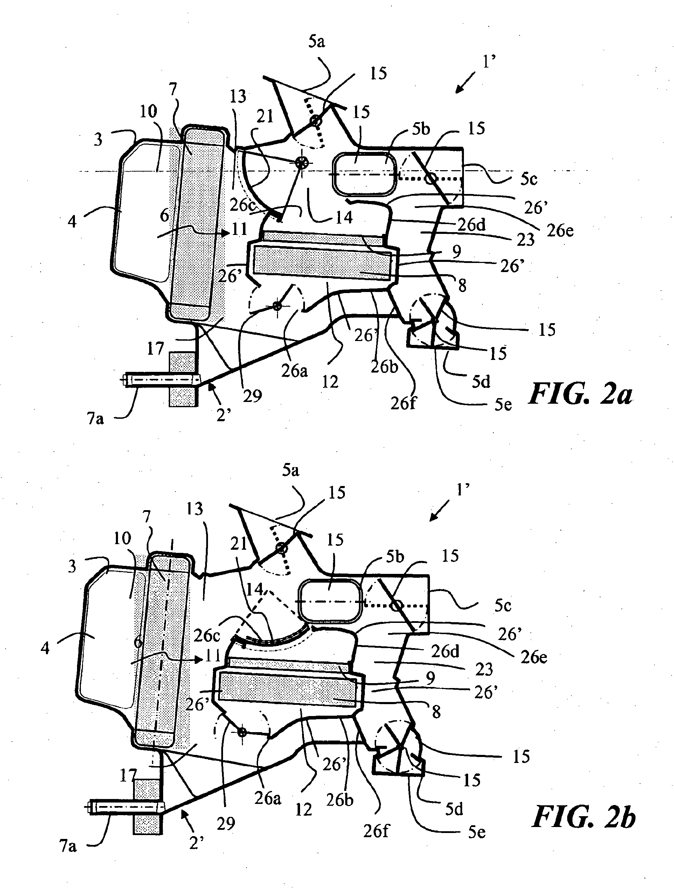

Les figures 2a et 2b représentent une vue en coupe d'une installation 1' d'installations de chauffage, de ventilation et/ou de climatisation selon une deuxième catégorie d'installations comportant une unique chambre de mixage principale, destinée à équiper un véhicule automobile pour réguler les paramètres aérothermiques du flux d'air distribué dans une ou plusieurs zones de l'habitacle d'un véhicule automobile.

Le boîtier 2' de la deuxième catégorie d'installations est délimité par une enveloppe 3 identique à celle du boîtier 2 de la première catégorie d'installations, de sorte que les boîtiers 2, 2' définissent un même volume et donc un même encombrement dans le véhicule.

Une partie commune des boîtiers 2, 2', comporte une même disposition pour l'entrée d'air 4, les sorties d'air 5a, 5b, 5 c, 5 d et 5e, la chambre d'air froid 11, la chambre de chauffage 12, la chambre de mixage principale 14, le canal principal d'air froid 13 et le canal secondaire d'air froid 17. En outre, la partie commune des boîtiers comporte une portion de paroi d'isolation commune, autour de la chambre de chauffage 12, présentant une bouche principale d'admission d'air froid 26a et une bouche principale de refoulement d'air chaud 26c.

Toutefois, dans la deuxième catégorie d'installations, l'installation 1' comporte une unique chambre de mixage principale 14.

De plus, la paroi d'isolation 26' est configurée différemment. Celle-ci s'étend de part et d'autre de la chambre de chauffage 12, depuis la première bouche d'admission d'air froid 26a jusqu'à la bouche principale de refoulement d'air chaud 26c, obturant la deuxième bouche d'admission d'air froid 26b et la bouche secondaire de refoulement 26d, de sorte que le flux d'air chaud soit entièrement dirigé vers la chambre de mixage principale 14.

Un accès 26e est ménagé dans la paroi d'isolation 26' entre les sorties d'air de la première 5a, 5b, 5c et celles de la deuxième zone 5 d, 5e, de sorte que les sorties d'air de la première 5a, 5b, 5c et celles de la deuxième zone 5d, 5e soient en communication aéraulique par le canal de dérivation 23. Le canal de dérivation 23 forme alors un canal de flux d'air traité de la chambre de mixage principal 14 vers les sorties 5d, 5e pour la zone arrière.

De plus, la paroi d'isolation 26' obture également une sortie 26f du canal secondaire d'air froid 17 destiné dans la première catégorie à alimenter en flux d'air froid la deuxième chambre de mixage 18. Ainsi, le flux secondaire d'air froid est susceptible de circuler uniquement vers la chambre de mixage principale 14. il est à noter que dans cette variante, le canal secondaire d'air froid 17 étant obturé par une partie de la paroi d'isolation 26', une portion de ce canal secondaire d'air froid 17 constitue alors une région sans issue pour le flux d'air froid s'y engouffrant.

La chambre de mixage principale 14 peut donc être alimentée de façon contrôlée en air froid et en air chaud par le canal principal d'air froid 13 et le flux principal d'air chaud provenant de la bouche principale de refoulement d'air chaud 26c. La chambre de mixage principale 14 est apte à délivrer un flux d'air mixé respectif à chacune des sorties 5a, 5b, 5c, 5d et 5e pour la zone avant de l'habitacle et la zone arrière de l'habitacle.

L'installation 1' permet donc d'obtenir un flux d'air avant et un flux d'air arrière à des mêmes températures.

Ainsi, on peut obtenir, à partir d'une partie de boîtier commune et à partir des mêmes composants, une installation 1 selon une première catégorie d'installations à deux chambres de mixage 14, 18 ou une installation 1' selon une deuxième catégorie d'installations plus économique, ne comportant qu'une seule chambre de mixage 14.

En outre, avec cet agencement, le canal de dérivation 23 est utilisé soit dans la première catégorie d'installations comme un canal secondaire d'air chaud, soit dans la deuxième catégorie d'installations comme un canal de flux traité. Il n'est donc plus nécessaire de superposer un conduit d'air chaud et un conduit d'air traité dans le véhicule entre la zone avant et la zone arrière pour gérer les deux variantes d'installations.

On peut prévoir en outre que la paroi d'isolation comporte des panneaux de séparation montés amovibles dans la partie commune du boîtier pour configurer la paroi d'isolation selon ladite première catégorie d'installations ou selon ladite deuxième catégorie d'installations.

Pour une cadence plus élevée de la production, on prévoit un procédé de fabrication d'un corps de boîtier dans lequel on utilise un outillage de moulage présentant une moule commun destiné à mouler la partie commune du boîtier.

On adapte ensuite des pavés amovibles dans l'outillage de moulage pour le moulage d'une paroi d'isolation du boîtier configurée soit pour ladite première catégorie d'installations, soit pour ladite deuxième catégorie d'installations.

Le moule commun façonne par exemple une paroi d'isolation commune présentant quatre ouvertures dont une première bouche d'admission d'air froid 26a, une deuxième bouche d'admission d'air froid 26b, une bouche principale de refoulement d'air chaud 26c et une bouche secondaire de refoulement d'air chaud 26d.

Pour obtenir une installation de chauffage, ventilation et/ou climatisation selon ladite première catégorie, on dispose alors un pavé amovible dans l'outillage du moule commun configuré pour mouler la paroi d'isolation 26 depuis ladite bouche principale de refoulement d'air chaud 26c jusqu'à une enveloppe 3 du boîtier, de manière à cloisonner le canal secondaire de flux d'air chaud 23 et l'isoler des sorties d'air 5a, 5b, 5c de ladite première zone.

Pour obtenir une installation de chauffage, ventilation et/ou climatisation selon ladite deuxième catégorie, on dispose un pavé amovible dans l'outillage du moule commun configuré pour que la paroi d'isolation 26' obture ladite deuxième bouche d'admission d'air froid 26b, ladite bouche secondaire de refoulement d'air chaud 26d et la sortie 26f du canal secondaire d'air froid 17 destiné dans la première catégorie à alimenter en flux d'air froid la deuxième chambre de mixage 18.

Pour faciliter l'assemblage du boîtier, notamment avec les volets de réglage 15, on prévoit qu'un sous-ensemble de distribution 35 de la deuxième zone comportant une partie de l'enveloppe 3 du boîtier et les sorties d'air 5d et 5e, est rapporté au boîtier.

Ainsi, à partir d'une même conception de base de l'outillage du moule commun, de légères modifications sont ensuite à prévoir au niveau des pavés pour mouler le corps du boîtier dans la configuration souhaitée.

## Revendications

1. Installation de chauffage, ventilation et/ou climatisation pour un habitacle de véhicule automobile, comprenant un boîtier (2, 2'), présentant au moins:
- une entrée d'air (4),
- une chambre d'air froid (11),
- une chambre de chauffage (12),
- une chambre de mixage principale (14) comportant au moins un organe principal de mixage (21), ladite chambre de mixage principale (14) pouvant être alimentée de façon contrôlée en air froid et en air chaud par lesdites chambres d'air froid (11) et de chauffage (12), et
- au moins une sortie d'air (5a, 5b, 5c, 5d, 5e) en aval de ladite chambre de mixage principale (14) selon le sens de circulation d'un flux d'air traversant le boîtier (2, 2'), le boîtier (2, 2') étant délimité par une enveloppe (3) définissant un volume pour une première et une deuxième catégorie d'installations de chauffage, ventilation et/ou climatisation (1, 1'), la première catégorie d'installation de chauffage, ventilation et/ou climatisation (1) comportant ladite chambre de mixage principale (14) pour la commande des paramètres aérothermiques de l'air distribué dans au moins une première zone de l'habitacle, et une chambre de mixage secondaire (18) pour la commande des paramètres aérothermiques de l'air distribué dans au moins une deuxième zone de l'habitacle indépendamment de la commande dans ladite première zone, et pour une deuxième catégorie d'installations de chauffage, ventilation et/ou climatisation (1') comportant une unique chambre de mixage principale (14), un canal de dérivation (23) étant ménagé dans une partie commune du boîtier (2, 2'), ladite chambre d'air froid (11) de ladite partie commune du boîtier (2, 2') débouchant dans un canal principal et un canal secondaire d'air froid (11, 17), l'agencement du canal principal d'air froid (11), du canal secondaire d'air froid (17) et du canal de dérivation (23) définissant un volume a l'intérieur duquel la chambre de chauffage (12) est ménagée,
l'installation étant telle que:
- dans ladite première catégorie d'installations (1), le canal de dérivation (23) forme un canal secondaire d'air chaud, lesdits canaux secondaires d'air froid et d'air chaud (17, 23) débouchant dans ladite chambre de mixage secondaire (18), et
- dans ladite deuxième catégorie d'installations (1'), le canal de dérivation (23) forme un canal de flux d'air traite en température de ladite chambre de mixage (14) vers les sorties d'air (5d, 5e) distribuant l'air vers ladite deuxième zone,
ladite installation étant **caractérisée en ce que** l'enveloppe définit un volume identique pour lesdites première et deuxième catégories d'installations,
ladite chambre de chauffage (12) est délimitée par une paroi d'isolation (26, 26'), une portion de ladite paroi d'isolation (26, 26') appartenant à ladite partie commune du boîtier (2, 2') présentant une bouche principale de refoulement d'air chaud (26c) et une première bouche d'admission d'air froid (26a) à travers laquelle une première fraction du flux secondaire d'air froid est susceptible de circuler afin de traverser par la suite un radiateur de chauffage (8) et/ou un radiateur additionnel (9),
ladite première bouche d'admission d'air froid (26a) étant équipée d'un premier volet de mixage d'air additionnel (29) mobile entre une position d'ouverture dans laquelle il autorise le passage de la première fraction du flux secondaire d'air froid depuis le canal secondaire d'air froid (17) vers la chambre de chauffage (12), et une position de fermeture dans laquelle il interdit un tel passage.

2. Installation de chauffage, ventilation et/ou climatisation selon la revendication 1, **caractérisée en ce que** dans la première catégorie d'installations (1), la paroi d'isolation (26) s'étend depuis ladite bouche principale de refoulement d'air chaud (26c) jusqu'à l'enveloppe (3) du boîtier (2), pour cloisonner ledit canal secondaire de flux d'air chaud (23) et l'isoler des sorties d'air (5a, 5b, 5c) distribuant l'air vers ladite première zone.

3. Installation de chauffage, ventilation et/ou climatisation selon l'une des revendications 1 et 2, **caractérisée en ce que** dans ladite deuxième catégorie d'installations (1'), la paroi d'isolation (26) s'étend de part et d'autre de la chambre de chauffage (12), depuis la première bouche d'admission d'air froid (26a) jusqu'à la bouche principale de refoulement d'air chaud (26c), les sorties d'air (5a, 5b, 5c) distribuant l'air vers ladite première zone et les sorties d'air (5d, 5e) distribuant l'air vers ladite deuxième zone étant en communication par le canal de dérivation (23) et la paroi d'isolation (26) obturant une sortie (26f) du canal secondaire d'air froid (17).

4. Installation de chauffage, ventilation et/ou climatisation selon l'une des revendications 1 à 3, **caractérisée en ce que** la paroi d'isolation (26, 26') comporte des panneaux de séparation montés amovibles dans la partie commune du boîtier (2, 2') pour configurer la paroi d'isolation (26, 26') selon ladite première catégorie d'installations (1) ou selon ladite deuxième catégorie d'installations (1').

5. Installation de chauffage, ventilation et/ou climatisation selon l'une des revendications précédentes, **caractérisée en ce que** la chambre de mixage principale (14) de ladite première catégorie d'installations de chauffage, ventilation et/ou climatisation est adaptée pour la commande des paramètres aérothermiques de l'air distribué dans une zone avant de l'habitacle et **en ce que** la chambre de mixage secondaire (18) de ladite première catégorie d'installations de chauffage, ventilation et/ou climatisation est adaptée pour la commande des paramètres aérothermiques de l'air distribué dans une zone arrière dudit habitacle.

## Patentansprüche

1. Heizungs-, Lüftungs- und/oder Klimaanlage für einen Kraftfahrzeuginnenraum, die ein Gehäuse (2, 2') umfasst und wenigstens Folgendes aufweist:
- einen Lufteingang (4),
- eine Kaltluftkammer (11),
- eine Heizkammer (12),
- eine Hauptmischkammer (14), die wenigstens ein Hauptmischorgan (21) aufweist, wobei die Hauptmischkammer (14) gesteuert mit Kaltluft und Warmluft von der Kaltluftkammer (11) und der Heizkammer (12) versorgt werden kann, und
- wenigstens einen Luftausgang (5a, 5b, 5c, 5d, 5e) stromabwärts der Hauptmischkammer (14) entlang der Zirkulationsrichtung eines Luftstroms, der das Gehäuse (2, 2') durchquert, wobei die Kammer (2, 2') durch einen Mantel (3) begrenzt ist, der ein Volumen für eine erste und eine zweite Kategorie von Heizungs-, Lüftungs- und/oder Klimaanlagen (1, 1') definiert, wobei die erste Kategorie Heizungs-, Lüftungs- und/oder Klimaanlagen (1) die Hauptmischkammer (14) zum Steuern der aerothermischen Parameter der Luft, die in wenigstens einem ersten Bereich des Innenraums verteilt wird, und eine Nebenmischkammer (18) zum Steuern der aerothermischen Parameter der Luft, die in wenigstens einem zweiten Bereich des Innenraums unabhängig von der Steuerung in dem ersten Bereich verteilt wird, aufweist, und für eine zweite Kategorie Heizungs-, Lüftungs- und/oder Klimaanlagen (1'), die eine einzige Hauptmischkammer (14) aufweisen, wobei ein Abzweigkanal (23) in einem gemeinsamen Teil des Gehäuses (2, 2') eingerichtet ist, wobei die Kältekammer (11) des gemeinsamen Teils des Gehäuses (2, 2') in einen Kaltlufthaupt- und einen Kaltluftnebenkanal (11, 17) mündet, wobei die Einrichtung des Kaltlufthauptkanals (11), des Kaltluftnebenkanals (17) und des Abzweigkanals (23) ein Volumen bilden, in dessem Inneren die Heizkammer (12) eingerichtet ist, wobei die Anlage derart ist, dass:
- bei der ersten Kategorie von Anlagen (1) der Abzweigkanal (23) einen Warmluftnebenkanal bildet, wobei der Kaltluft- und der Warmluftnebenkanal (17, 23) in die Nebenmischkammer (18) münden, und
- bei der zweiten Kategorie von Anlagen (1') der Abzweigkanal (23) einen Kanal eines Stroms temperaturbehandelter Luft der Mischkammer (14) zu den Luftausgängen (5d, 5e), die Luft zu dem zweiten Bereich verteilen, bildet,
wobei die Anlage **dadurch gekennzeichnet ist, dass** der Mantel ein identisches Volumen für die erste und die zweite Kategorie von Anlagen bildet,
die Heizkammer (12) von einer Isolierwand (26, 26') abgegrenzt ist, wobei ein Teil der Isolierwand (26, 26'), der zu dem gemeinsamen Teil des Gehäuses (2, 2') gehört, eine Warmlufthauptförderöffnung (26c) und eine erste Kaltlufteinlassöffnung (26a) aufweist, durch die ein erster Bruchteil des zweiten Kaltluftstroms zirkulieren kann, um danach einen Wärmetauscher (8) und/oder einen zusätzlichen Heizkörper (9) zu durchqueren,
wobei die erste Kaltlufteinlassöffnung (26a) mit einer ersten Zusatzmischluftklappe (29) versehen ist, die zwischen einer Öffnungsposition, in der sie den Durchgang des ersten Bruchteils des zweiten Kaltluftstroms vom Kaltluftnebenkanal (17) zur Heizkammer (12) gestattet, und einer Schließposition, in der sie einen solchen Durchgang unterbindet, beweglich ist.

2. Heizungs-, Lüftungs- und/oder Klimaanlage nach Anspruch 1, **dadurch gekennzeichnet, dass** sich die Isolierwand (26) bei der ersten Kategorie von Anlagen (1) von der Warmlufthauptförderöffnung (26c) bis zu dem Mantel (3) des Gehäuses (2) erstreckt, um den Warmluftstromnebenkanal (23) abzuschotten und von den Luftausgängen (5a, 5b, 5c), die die Luft zu dem ersten Bereich verteilen, zu isolieren.

3. Heizungs-, Lüftungs- und/oder Klimaanlage nach einem der Ansprüche 1 und 2, **dadurch gekennzeichnet, dass** sich bei der zweiten Kategorie von Anlagen (1') die Isolierwand (26) zu beiden Seiten der Heizkammer (12) von der ersten Kaltlufteinlassöffnung (26a) bis zu der Warmlufthauptförderöffnung (26c) erstreckt, wobei die Luftausgänge (5a, 5b, 5c), die die Luft zu dem ersten Bereich verteilen, und die Luftausgänge (5d, 5e), die die Luft zu dem zweiten Bereich verteilen, durch den Abzweigkanal (23) in Verbindung sind und die Isolierwand (26) einen Ausgang (26f) des Kaltluftnebenkanals (17) verschließt.

4. Heizungs-, Lüftungs- und/oder Klimaanlage nach einem der Ansprüche 1 bis 3, **dadurch gekennzeichnet, dass** die Isolierwand (26, 26') Trenntafeln aufweist, die abnehmbar in dem gemeinsamen Teil des Gehäuses (2, 2') installiert sind, um die Isolierwand (26, 26') gemäß der ersten Kategorie von Anlagen (1) oder gemäß der zweiten Kategorie von Anlagen (1') zu konfigurieren.

5. Heizungs-, Lüftungs- und/oder Klimaanlage nach einem der vorhergehenden Ansprüche, **dadurch gekennzeichnet, dass** die Hauptmischkammer (14) der ersten Kategorie von Heizungs-, Lüftungs- und/oder Klimaanlagen zum Steuern der aerothermischen Parameter der Luft, die in einem vorderen Bereich des Innenraums verteilt wird, angepasst ist, und dass die Nebenmischkammer (18) der ersten Kategorie von Heizungs-, Lüftungs- und/oder Klimaanlagen zum Steuern der aerothermischen Parameter der Luft, die in einem hinteren Bereich des Innenraums verteilt wird, angepasst ist.

## Claims

1. Heating, ventilating and/or air conditioning device for a motor-vehicle interior, comprising a housing (2, 2'), having at least:
- one air inlet (4),
- one cold air chamber (11)
- one heating chamber (12),
- one main mixing chamber (14) comprising at least one main mixing member (21), the said main mixing chamber (14) being able to be fed in a controlled manner with cold air and with hot air by the said cold air chamber (11) and heating chamber (12), and
- at least one air outlet (5a, 5b, 5c, 5d, 5e) downstream of the said main mixing chamber (14) in the direction of travel of an air stream passing through the housing (2, 2'), the housing (2, 2') being delimited by a casing (3) defining a volume for a first and a second category of heating, ventilating and/or air conditioning devices (1, 1'), the first category of heating, ventilating and/or air conditioning device (1) comprising the said main mixing chamber (14) for controlling the aerothermal parameters of the air distributed in at least one first zone of the interior, and a secondary mixing chamber (18) for controlling the aerothermal parameters of the air distributed in at least one second zone of the interior independently of the control of the said first zone, and for a second category of heating, ventilating and/or air conditioning devices (1') comprising a single main mixing chamber (14), a branch duct (23) being arranged in a common portion of the housing (2, 2'), the said cold air chamber (11) of the said common portion of the housing (2, 2') leading into a main duct and a secondary cold-air duct (11, 17), the arrangement of the main cold-air duct (11), of the secondary cold-air duct (17) and of the branch duct (23) defining a volume inside which the heating chamber (12) is arranged, the device being such that:
- in the said first category of devices (1), the branch duct (23) forms a secondary hot-air duct, the said secondary cold-air and hot-air ducts (17, 23) leading into the said secondary mixing chamber (18), and
- in the said second category of devices (1'), the branch duct (23) forms a duct of temperature-treated air stream from the said mixing chamber (14) to the said air outlets (5d, 5e) distributing the air to the said second zone,
the said device being **characterized in that** the casing defines an identical volume for the said first and second categories of devices,
the said heating chamber (12) is delimited by an insulating wall (26, 26'), a portion of the said insulating wall (26, 26') belonging to the said common portion of the housing (2, 2') having a main hot-air outlet (26c) and a first cold-air intake (26a) through which a first fraction of the secondary cold-air stream is capable of circulating in order to subsequently pass through a heating radiator (8) and/or an additional radiator (9),
the said first cold-air intake (26a) being equipped with a first additional air-mixing flap (29) which can move between an open position in which it allows the passage of the first fraction of the secondary cold-air stream from the secondary cold-air duct (17) to the heating chamber (12), and a closed position in which it prevents such a passage.

2. Heating, ventilating and/or air conditioning device according to Claim 1, **characterized in that**, in the first category of devices (1), the insulating wall (26) extends from the said main hot-air outlet (26c) to the casing (3) of the housing (2), in order to partition the said secondary hot-air-stream duct (23) and insulate it from the air outlets (5a, 5b, 5c) delivering the air to the said first zone.

3. Heating, ventilating and/or air conditioning device according to either of Claims 1 and 2, **characterized in that**, in the said second category of devices (1'), the insulating wall (26) extends on either side of the heating chamber (12), from the first cold-air inlet (26a) to the main hot-air outlet (26c), the air outlets (5a, 5b, 5c) delivering the air to the said first zone and the air outlets (5d, 5e) delivering the air to the said second zone being in communication via the branch duct (23) and the insulating wall (26) closing off an outlet (26f) of the secondary cold-air duct (17) .

4. Heating, ventilating and/or air conditioning device according to one of Claims 1 to 3, **characterized in that** the insulating wall (26, 26') comprises separating panels mounted removably in the common portion of the housing (2, 2') in order to configure the insulating wall (26, 26') according to the said first category of devices (1) or according to the said second category of devices (1').

5. Heating, ventilating and/or air conditioning device according to one of the preceding claims, **characterized in that** the main mixing chamber (14) of the said first category of heating, ventilating and/or air conditioning devices is adapted for the control of the aerothermal parameters of the air delivered in a front zone of the interior and **in that** the secondary mixing chamber (18) of the said first category of heating, ventilating and/or air conditioning devices is adapted for the control of the aerothermal parameters of the air delivered in a rear zone of the said interior.
